# EUROPÄISCHE PATENTSCHRIFT

(11) **EP 1 597 506 B1**
(45) Veröffentlichungstag und Bekanntmachung des Hinweises auf die Patenterteilung: **13.09.2006**
(21) Anmeldenummer: 04712529.9
(22) Anmeldetag: 19.02.2004
(51) Int. Cl.: F16L 11/16, F01N 7/18

(54) **FLEXIBLES LEITUNGSELEMENT**
FLEXIBLE PIPE ELEMENT
ELEMENT DE CONDUITE FLEXIBLE

(30) Priorität: 19.02.2003 DE 20302657 U
(43) Veröffentlichungstag der Anmeldung: 23.11.2005
(73) Patentinhaber: Witzenmann GmbH, 75175 Pforzheim (DE)
(72) Erfinder: HEIL, Bernhard, 76307 Langensteinbach (DE); SAUR, Gebhard, 75217 Birkenfeld (DE)
(74) Vertreter: Kaiser, Magnus
(86) Internationale Anmeldenummer: PCT/EP2004/001608
(87) Internationale Veröffentlichungsnummer: WO 2004/074727

(56) Entgegenhaltungen:
- EP-A- 0 282 689
- EP-A- 0 875 669
- AT-B- 8 692
- CH-A- 18 165
- DE-C- 199 185
- DE-U- 29 707 908

## Beschreibung

Die Erfindung betrifft ein flexibles Leitungselement, insbesondere für die Abgasanlage eines Kraftfahrzeugs, mit einem schraubengangförmigen oder ringgewellten Metallbalg, mit einem koaxial innerhalb des Metallbalgs angeordneten, schraubengangförmig gewickelten oder ringförmige Segmente aufweisenden Metallschlauch, dessen Außenquerschnitt kleiner als der lichte Innenquerschnitt des Metallbalgs ist, und mit mindestens einem zwischen dem Metallbalg und dem Metallschlauch angeordneten Abstandhalter.

Solche flexiblen Leitungselemente werden in die Abgasleitungen von Kraftfahrzeugen eingesetzt, um einerseits Lastwechselbewegungen und Schlechtweganregungen des Motors von der am Fahrzeugboden befestigten Abgasanlage abzukoppeln sowie andererseits Motorschwingungen durch nicht ausgeglichene, freie Massenkräfte von der Abgasanlage und somit vom Fahrzeugboden zu entkoppeln. Durch Letzteres wird verhindert, dass Vibrationen und Brummgeräusche in den Fahrzeuginnenraum geleitet werden; darüber hinaus erhöht sich die Lebensdauer der Abgasanlage, die durch Resonanzschwingungen ansonsten beeinträchtigt werden kann.

Flexible Leitungselemente der eingangs genannten Art sind beispielsweise aus der DE 297 07 908 U1 der Anmelderin oder der WO02/29302 A1 bekannt. Die dort beschriebenen Leitungselemente bestehen im Wesentlichen aus einem Metallbalg, der Außen mit einem Drahtgeflecht umgeben ist sowie einem koaxial innerhalb des Balges angeordneten Metallschlauch, der aus Agraffprofilen mit S-förmigem Querschnitt besteht. Der Agraffschlauch dient vor allem zur Strömungsführung und zum thermischen Schutz des Metallbalgs gegen die heißen Abgase des Verbrennungsmotors. Da der Metallbalg die Gasdichtheit des flexiblen Leitungselements gewährleistet und im wesentlichen auch für dessen mechanische Stabilität verantwortlich ist, sind an den Agraffschlauch keine besonderen Anforderungen an Stabilität oder Gasdichtheit zu stellen. Entsprechend dünnwandig ist dieser im allgemeinen ausgebildet.

Um gute Entkopplungseigenschaften sowohl für hochfrequente als auch für niederfrequente Schwingungen zu gewährleisten, ohne einen allzu großen Einbauraum zu benötigen, ist es vorteilhaft, die Steifigkeit eines eingangs genannten flexiblen Leitungselements möglichst gering zu halten.

Die Profile eines Agraffschlauchs bestehen aus einem sich im wesentlichen radial erstreckenden mittleren Abschnitt, an dessen beiden Enden sich axial verlaufende Abschnitte anschließen, die sich in entgegengesetzter Axialrichtung erstrecken. An den Enden dieser axial verlaufenden Abschnitte schließen sich radial verlaufende Abschnitte an. Dabei zeigt der radial verlaufende Abschnitt des radial innen liegenden axialen Abschnittes nach außen und der radial verlaufende Abschnitt des radial außen liegenden axialen Abschnittes nach innen. An den freien Enden der radialen Abschnitte ist jeweils ein weiterer axial verlaufender Abschnitt angeordnet, der sich in Richtung des mittleren radialen Abschnittes erstreckt. Dadurch kommt es zu einem Verhaken benachbarter Segmente oder Wicklungen, wodurch der Schlauch seine große Eigenstabilität erhält. Der zwischen den benachbarten Segmenten oder Wicklungen herrschende Formschluss verleiht dem Schlauch neben einer hohen Festigkeit bei Zug-, Biege- und Lateralbeanspruchung vor allem auch bei Torsionsbelastung eine sehr große Stabilität, weil eine Durchmesseränderung des Schlauches durch eine torsionsbedingte Verdrehung aufgrund des radialen Formschlusses verhindert wird und ein Aushaken benachbarter Segmente oder Wicklungen wirkungsvoll vermieden wird.

Nachteilig am Agraffschlauch ist daher die aufwendige und kostenintensive Herstellung, da es zur Ausformung dieser komplexen ineinander verhakten Geometrie aufwendiger Werkzeuge und Maschinen bedarf, deren Fertigungsgeschwindigkeit aufgrund der engen einzuhaltenden Toleranzen gering ist. Hinzu kommt ein großer Materialeinsatz, da zumindest teilweise vier Materiallagen in radialer Richtung übereinander liegen. Die vier übereinander liegenden Materiallagen erfordern auch eine große radiale Ausdehnung des Agraffprofiles, wodurch sich bei gegebenem Außendurchmesser ein relativ kleiner Innendurchmesser ergibt, der die Strömung und insbesondere den auftretenden Druckverlust nachteilig beeinflusst. Oder anders gesagt, bei gegebenem Innendurchmesser benötigt der Agraffschlauch in radialer Richtung relativ viel Bauraum, was sich negativ auf das Packaging im Fahrzeug auswirkt.

Nachteilig ist weiterhin, dass durch die axial verlaufenden Abschnitte des Agraffprofiles, welche sich in jeder Lage des Schlauches zur Erzielung der nötigen Eigenstabilität überlappen, die Beweglichkeit des Schlauches einschränken. Dies führt bei gegebener auszugleichender Bewegung zu, in Axialrichtung, langen Entkoppelelementen, welche einen unnötig großen Bauraum beanspruchen sowie durch den großen Materialeinsatz entsprechend teuer und schwer sind. Nachteilig bei dieser Form des Wickelschlauches ist weiterhin, dass es durch Berührung axial aneinander grenzender, sich miteinander verhakender Wicklungen zu Reibung kommt, die die Steifigkeit des Schlauches erhöht und die Entkopplungswirkung herabsetzt.

Der Erfindung liegt daher die Aufgabe zugrunde, ein flexibles Leitungselement der eingangs genannten Art derart weiterzubilden, dass dessen Beweglichkeit erhöht bzw. eine bestimmte Beweglichkeit auch mit kürzeren Bauteilen erzielt werden kann.

Diese Aufgabe ist durch ein flexibles Leitungselement mit den Merkmalen des beigefügten Schutzanspruchs 1 gelöst. Vorteilhafte Ausgestaltungen und Weiterbildungen des erfindungsgemäßen Leitungselements sind in den Schutzansprüchen 2 bis 23 niedergelegt.

Das erfindungsgemäße flexible Leitungselement zeichnet sich also neben den eingangs genannten Merkmalen durch die spezielle Ausbildung des Metallschlauchs aus: Dieser ist so ausgebildet, dass die einzelnen Wicklungen oder die einzelnen ringförmigen Segmente zumindest in Stauchlage in Radialrichtung keinen Formschluss mit der jeweils benachbarten Wicklung oder dem jeweils benachbarten Segment aufweisen.

Dies ist eine radikale Abkehr vom Konzept des Agraffschlauchs. Denn beim Agraffschlauch sind dessen Profilkanten derart nach innen zurückgebogen, dass sie ein axiales Bord bilden, welches mit dem axialen Bord des jeweils benachbarten Segments bzw. der jeweils benachbarten Wicklung auch in der Stauchlage des Schlauchs radial überlappt. Insbesondere bei gewickelten Agraffschläuchen würden sich die Wicklungen sonst bei einer Torsionsbelastung des Schlauchs aushaken und die Eigenstabilität des Schlauches ginge verloren.

Erfindungsgemäß ist nun erkannt worden, dass die Bordlänge dieser zurückgebogenen Profilkanten eines herkömmlichen Agraffschlauchs die axiale Bewegung des Metallschlauchs begrenzt; denn die Ausziehlänge des Agraffschlauchs wird pro Wicklung bzw. pro Segment durch jeweils eine Bordlänge der Profilkanten vermindert. Erfindungsgemäß ist weiterhin erkannt worden, dass die Herstellung eines derart eingehakten Profils teuer ist, da enge Toleranzen eingehalten werden müssen, um einen funktionsfähigen Schlauch zu erhalten, und die Herstellung dieser komplexen Geometrie aufwendige Werkzeuge und Maschinen erfordert. Es ist zudem erkannt worden, dass die beim Agraffschlauch vorhandene Widerstandsfähigkeit gegen Torsionsbelastungen im gegebenen Zusammenhang des vorliegenden flexiblen Leitungselements unwichtig ist, da der Metallbalg torsionssteif ist. Zusätzlich ist der Schlauch in dem erfindungsgemäßen Entkoppelelement in radialer Richtung durch den Abstandhalter, zumindest lokal, gegen den Balg abgestützt, so dass auch deswegen auf den radialen Formschluss zwischen den benachbarten Windungen bzw. Segmenten verzichtet werden kann. Darüber hinaus werden Geräuschemissionen, die ein an den Balg anschlagender Schlauch verursacht durch den Abstandhalter wirkungsvoll vermieden. Die radiale Überlappung, die in Stauchlage einen Formschluss der einzelnen Metallschlauchsegmente bzw. -wicklungen untereinander bestehen lässt, kann also entfallen. Hierdurch wird der Weg für Axialbewegungen länger, was sich auch auf laterale Bewegungen sowie den Mindestbiegeradius positiv auswirkt. Außerdem wird die Reibung zwischen den einzelnen Segmenten bzw. Wicklungen verringert, was die Flexibilität des Metallschlauchs und somit des gesamten Leitungselements nochmals vorteilhaft erhöht. Der vorhandene Abstandhalter, der durchaus so dimensioniert sein kann, dass er keinen nennenswerten Beitrag zum Dämpfungsverhalten des Leitungselements liefert, stellt sicher, dass an die Eigenstabilität des verwendeten Metallschlauchs nur geringe Anforderungen gestellt werden müssen.

Der Abstandhalter kann am Balg oder am Schlauch zumindest lokal stoff-, form- oder kraftschlüssig fixiert sein oder aber lose angebracht werden. Dabei muss der Abstandhalter in Umfangsrichtung keine konstante Dicke aufweisen. Vielmehr kann der Abstandhalter auch streifenförmig, helixförmig oder beliebig anders ausgebildet sein. Wichtig ist nur, dass an mindestens einer Stelle der Spalt zwischen Balg und Wickelschlauch so ausgefüllt ist, dass ein Anschlagen des Schlauches an den Balg verhindert wird.

Der Querschnitt des Schlauches ist in einer bevorzugten Ausgestaltung rund ausgeführt, aber auch andere Querschnittsformen wie polygonförmig, oval oder beliebig andere sind denkbar.

Es gibt daher viele verschiedene Möglichkeiten, die Erfindung zu verwirklichen. Wichtig ist nur, dass etwa vorhandene formschlüssige Überdeckungen von hakenförmig abgebogenen Kanten des Wicklungs- oder Segmentprofils nicht im radialen Formschluss bleiben, wenn der Metallschlauch gestaucht wird, d.h. zwei axial benachbarte Ringsysteme oder Wicklungsabschnitte mit in Umfangsrichtung entsprechender Position können in radialer Richtung beliebig vergrößert werden, ohne mit dem benachbarten Ringsystem oder Wicklungsabschnitt in Kontakt zu kommen. Der Schlauch ist in einer bevorzugten Ausgestaltung aus einem Band gewickelt, es können aber auch zwei oder mehrere Bänder zu einem Schlauch gewickelt werden. Wenn mehrere Bänder zu einem Schlauch verarbeitet werden, so müssen diese nicht aus dem selben Werkstoff gefertigt sein. Vielmehr besteht die Möglichkeit unterschiedliche Materialien oder Oberflächen miteinander zu kombinieren, was insbesondere die Tribologie des Schlauches verbessern kann.

Der Abstandhalter kann in an sich bekannter Weise aus einem Gewebe, Gestricke, Geflecht oder einem Vlies bestehen und, wie ebenso bereits an sich bekannt, entweder als Schlauch, als Schlauchabschnitt, als Helix oder als eine Mehrzahl von Streifen ausgebildet sein. Die Herstellungsart und die Formung des Abstandhalters hängt im wesentlichen davon ab, welche Dämpfungseigenschaften damit erzielt oder vermieden werden sollen.

Der Abstandhalter ist zweckmäßigerweise in einer Art und Weise angeordnet, dass er den Metallschlauch innerhalb des Metallbalgs radial festlegt. Dies bedeutet dass der Abstandhalter zumindest lokal den radialen Raum zwischen dem Metallschlauch und dem Metallbalg in Radialrichtung vollständig ausfüllt, so dass an dieser Stelle der Metallschlauch gegenüber dem Metallbalg kein Spiel hat. Hierdurch wird jegliche Geräuschentwicklung insbesondere aufgrund einer Anregung des Metallbalgs oder des Metallschlauchs in seiner Eigenfrequenz verhindert.

In wiederum an sich bekannter Weise kann der Metallbalg des erfindungsgemäßen flexiblen Leitungselements außen von mindestens einer Komponente, beispielsweise von einem Geflecht und/oder Gestricke umgeben sein. Neben einer gegebenenfalls erwünschten Dämpfungswirkung schützt diese äußere Hülle den Metallbalg vor mechanischen Beschädigungen und bietet darüber hinaus eine Begrenzung gegen eine zu starke Längung des Metallbalgs. Dieses Geflecht und/oder Gestricke ist vorzugsweise so eng um den Metallbalg herum angeordnet, dass auch hier keine Geräuschentwicklung durch Gegeneinanderschlagen oder Eigenschwingungen zu befürchten ist. Der Balg kann auch von mehreren Komponenten umgeben sein, beispielsweise einem Geflecht und einem Gestricke, mehreren Geflechten oder mehreren Gestricken. Dabei müssen diese nicht zwingend die gesamte Länge des Balges bedecken, es ist vielmehr auch denkbar, dass nur ein Teil des Balges von diesen Komponenten umgeben ist. Es ist auch nicht zwingend notwendig, die den Balg umgebenden Gestricke oder Geflechte auf diesem axial unverrückbar zu fixieren.

Hinsichtlich der Balggestaltung kann dieser über seine gesamte Länge Wellen mit konstantem Außendurchmesser aufweisen. Zweckmäßigerweise können aber auch eine oder mehrere Endwellen einen geringeren Außendurchmesser haben. Sollten mehrere Endwellen einen reduzierten Außendurchmesser haben, so ist in einer bevorzugten Ausgestaltung der Außendurchmesser dieser Wellen von der letzten Welle mit "normalem" Durchmesser bis hin zur Endwelle stetig fallend. Hierdurch werden die auf die Endwellen wirkenden Biegebelastungen, die durch die Umlenkung eines den Balg umgebenden Überzugs, der beispielsweise aus einem Geflecht oder Gestricke, welches in einer bevorzugten Ausgestaltung aus Metall besteht, auf die Endwellen einwirken, reduziert und die Welle gleichzeitig stabilisiert. In einer weiteren Ausgestaltung des Balges kann dieser einen nicht gewellten mittleren Bereich ausweisen, was bei vorwiegend lateraler Beanspruchung zu einer Material-, Gewichts- und Kosteneinsparung führt. Die Stabilität der Endwelle gegen die, durch einen vorhandenen Überzug, auftretenden Biegebelastungen kann auch dadurch erhöht werden, dass die Wellenlänge dieser Welle erhöht wird, wodurch sich eine bessere Abstützung ergibt. Dies kann auch zusätzlich mit einem geringeren Außendurchmesser der Endwelle kombiniert werden.

In an sich bekannter Weise können die Bälge aus einer oder mehreren Lagen gefertigt sein, wobei mehrere Lagen aufgrund des besseren Verschleißwiderstandes durchaus bevorzugt werden.

Der Querschnitt des Balges ist in einer bevorzugten Ausgestaltung rund, es sind jedoch auch andere Querschnittsformen möglich; so kann beispielsweise bei beschränktem Bauraum in einer Ebene durchaus auch ein ovaler Balgquerschnitt sinnvoll sein.

Der Metallschlauch kann aus Wicklungen oder Segmenten mit einem hakenförmigen Profil gebildet sein, wobei hakenförmige Profilkanten vorhanden sind, die sich zumindest in der Stauchlage des Metallschlauchs in Radialrichtung gegenseitig nicht überlappen. Eine solche Hakenform bietet eine gewisse, dem Agraffprofil angenäherte Stabilität, wobei jedoch gleichwohl die Beweglichkeit des Metallschlauchs aufgrund der fehlenden gegenseitigen Überlappung in Stauchlage gegenüber einem Agraffschlauch deutlich erhöht ist. Für die Hakenform der Profilkanten gibt es dabei wenig Vorgaben: Je größer die radiale Überdeckung im ausgezogenen Zustand des Metallschlauchs ist, umso höher ist die Stabilität und Widerstandsfähigkeit, während gleichzeitig die Beweglichkeit abnimmt.

Ein zweckmäßiger Kompromiss ist ein Profil, das aus einem inneren und einem äußeren axialen Abschnitt, einem diese verbindenden radialen Abschnitt sowie je einer von den axialen Abschnitten im wesentlichen radial abgebogenen Kante gebildet ist. Die axiale Beweglichkeit ist gegenüber einem Agraffschlauch verdoppelt, während dennoch eine wirkungsvolle Zugsicherung sowie eine verhältnismäßig hohe Isolationswirkung zwischen dem Gasstrom und dem Metallbalg bewirkt wird.

Die von den axialen Abschnitten abgebogene Kante muss allerdings nicht immer radial verlaufen; sie kann vielmehr auch zurückgebogen oder in einem kleineren Winkel als 90° abgebogen sein. In jedem Fall ist es allerdings zweckmäßig, wenn die Kanten eine geringere radiale Ausdehnung aufweisen als der radiale Abschnitt des Profils. Denn hierdurch wird eine Reibung der Kanten auf den axialen Abschnitten vermieden bzw. deutlich vermindert, was wiederum der Beweglichkeit des Metallschlauchs zugute kommt.

Wenn eine besonders hohe Beweglichkeit des Metallschlauchs gefragt ist, kann das Profil auch so ausgebildet sein, dass es im wesentlichen aus einem inneren und einem äußeren axialen Abschnitt sowie einem diese verbindenden Verbindungsabschnitt besteht, dass also die hakenförmig abgebogenen Profilkanten ganz entfallen. Diese Variante besitzt keinerlei Begrenzung der Bewegung in Zugrichtung, da aber bei erfindungsgemäßen Leitungselementen, deren Balg von einem Geflecht oder Gestricke umgeben ist, der Balg ohnehin vor einer übermäßigen Zugbelastung durch eben dieses Geflecht oder Gestricke geschützt ist, besteht keine Notwendigkeit, einen Schlauch mit Bewegungsbegrenzung in Zugrichtung einzubauen.

Als günstig hat sich erwiesen, den Metallschlauch schraubengangförmig zu wickeln und das Wicklungsprofil so auszugestalten, dass sich ein Verhältnis von der Steigung im gestreckten Zustand zur Steigung im gestauchten Zustand größer als 1,39 ergibt. Dies ist ein Verhältnis, das von den bisher üblichen Agraffschläuchen bauartbedingt gar nicht erzielt werden kann.

Weitere besondere Vorteile ergeben sich im Rahmen der Erfindung, wenn das flexible Leitungselement an mindestens einem seiner beiden Enden mit einem Anschlussstück versehen ist, welches einen äußeren Rohrabschnitt zum Aufsetzen eines zylindrischen Endes des Metallbalgs sowie einen inneren Rohrabschnitt zum Aufsetzen des Metallschlauchendes aufweist. Durch ein solches Anschlussstück kann der innenliegende Metallschlauch ohne die Notwendigkeit einer Aufweitung auf einfachste Weise an die normalerweise vorhandenen zylindrischen Enden des Metallbalgs angeschlossen und so an diesem festgelegt werden. Gleichzeitig kann das Anschlussstück mit Einrichtungen versehen sein, die das Befestigen in der Abgasleitung des Kraftfahrzeugs erleichtern oder eine lösbare Befestigung etwa über eine Flanschverbindung ermöglichen. Daneben kann das Anschlussstück auch eine Adapterfunktion übernehmen und so die Kombination von Metallschläuchen und Metallbälgen mit verschiedenen Durchmessern vereinfachen. Der Schlauch kann dabei mit dem Anschlussstück stoff-, form- oder kraftschlüssig verbunden sein. Beispielsweise können Schlauch und Anschlussstück über eine Schweißverbindung aneinander befestigt sein, es kann aber das Anschlussstück auch mit einer gewindeartigen Ausbuchtung versehen sein, welche in die Zwischenräume der einzelnen Schlauchwindungen eingreift und so einen Formschluss herstellt. Das Anschlussstück kann sowohl an der radialen Außen- als auch an der radialen Innenseite des Schlauches angebracht werden.

Selbstverständlich kann das Schlauchende auch direkt, also ohne Anschlussstück mit dem Balgbord verbunden sein. Dies kann sowohl stoffschlüssig, beispielsweise über eine Schweißverbindung, formschlüssig, beispielsweise mittels einer in Schlauch und Balg eingebrachten Sicke, als auch Kraftschlüssig, beispielsweise durch Verpressen, erfolgen. Auch Kombinationen, beispielsweise Verpressen und Schweißpunkte, sind denkbar.

Einige Ausführungsbeispiele für ein erfindungsgemäßes Leitungselement werden im folgenden anhand der beigefügten Zeichnungen näher beschrieben und erläutert. Es zeigen:
- Figur 1: einen schematischen Schnitt durch ein erfindungsgemäßes flexibles Leitungselement;
- Figuren 2 bis 11: einige Beispiele für Querschnittsformen der Metallschlauchwicklungen bzw. Metallschlauchsegmente;
- Figuren 12 bis 20: schematische Schnitte durch weitere Ausführungsbeispiele für ein erfindungsgemäßes flexibles Leitungselement.

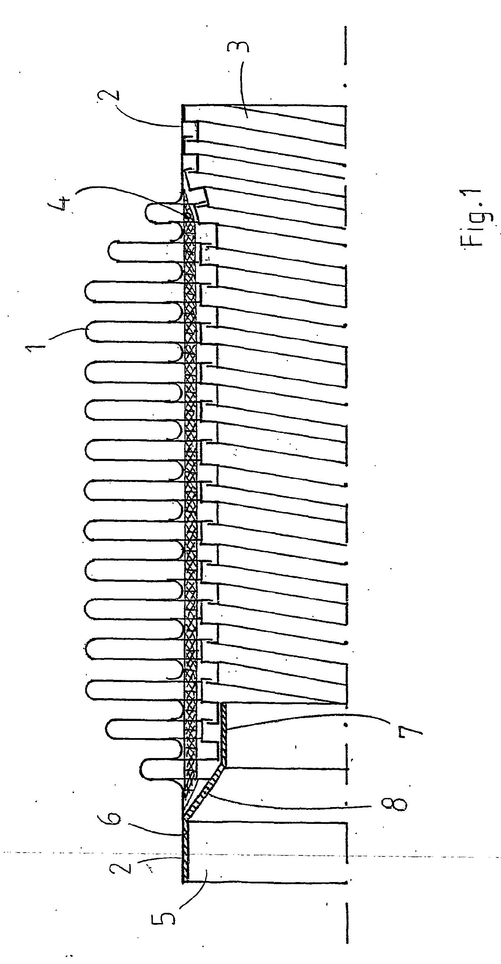

Figur 1 zeigt schematisch den Aufbau eines Beispiels für ein erfindungsgemäßes flexibles Leitungselement. Ein Metallbalg 1 mit zylindrischen Enden 2 ist mit einem koaxial innenliegenden, gewickelten Metallschlauch 3 versehen. Zwischen dem Metallschlauch 3 und dem Metallbalg 1 ist ein Abstandhalter 4 angeordnet, der als Gestrickeschlauch ausgebildet ist.

An dem in Figur 1 rechts dargestellten Ende des flexiblen Leitungselements ist der Metallschlauch 3 aufgeweitet, so dass er am zylindrischen Ende 2 des Metallbalgs 1 zum Anliegen kommt und dort mit diesem verbunden werden kann. Das in Figur 1 links dargestellte Ende des flexiblen Leitungselements ist dagegen mit einem separaten Anschlussstück 5 versehen, das einen äußeren Rohrabschnitt 6 und einen inneren Rohrabschnitt 7 aufweist, welche beiden Abschnitte durch einen konischen Abschnitt 8 verbunden sind. Der innere Rohrabschnitt 7 des Anschlussstücks 5 ist in seinem Außendurchmesser dem Innendurchmesser des Metallschlauchs 3 angepasst, so dass dieser einfach auf den inneren Rohrabschnitt 7 aufgesetzt und dort festgelegt werden kann. Der äußere Rohrabschnitt 6 des Anschlussstücks 5 ist in seinem Außendurchmesser hingegen dem Innendurchmesser des zylindrischen Endes 2 des Metallbalgs 1 angepasst, so dass dieser seinerseits auf den äußeren Rohrabschnitt 6 aufgeschoben und dort festgelegt werden kann. Gleichzeitig kann auch der Abstandhalter 4 am Anschlussstück 5 festgelegt werden. Das Anschlussstück 5 bietet also eine unkomplizierte und stabile Verbindung der Einzelteile des flexiblen Leitungselements, während es darüber hinaus auch die Gasströmung durch das Leitungsteil vorteilhaft führt.

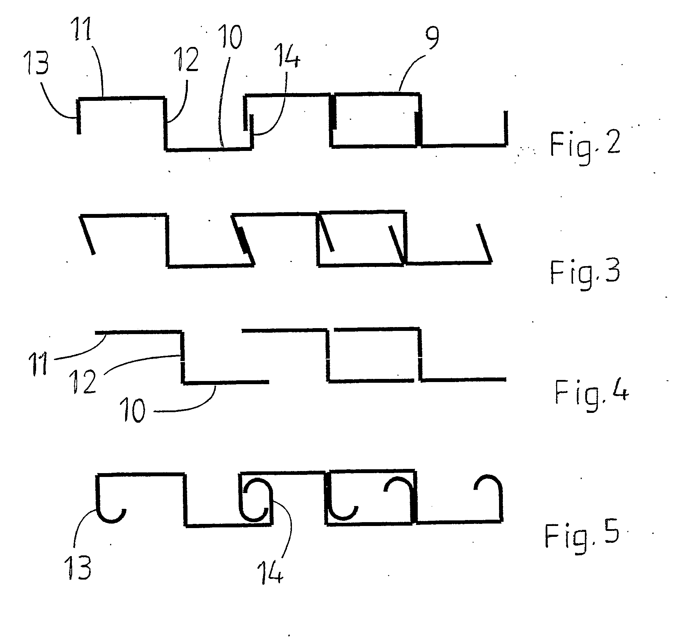

Der in Figur 1 dargestellte Metallschlauch 3 weist ein Profil auf, das in Figur 2 im Detail dargestellt ist.

Die Figuren 2 bis 11 zeigen jeweils einige Wicklungen bzw. Segmente von unterschiedlichen Metallschläuchen 3 im Schnitt, wobei jeweils links die Strecklage und rechts die Stauchlage des Metallschlauchs 3 dargestellt ist.

Das in Figur 2 gezeigte Profil 9 besteht aus einem inneren axialen Abschnitt 10, einem äußeren axialen Abschnitt 11, einem diese verbindenden radialen Abschnitt 12, sowie je einer von den axialen Abschnitten 10, 11 abgebogenen Profilkante 13, 14, wobei die Profilkanten 13, 14 radial verlaufen, jedoch gleichzeitig eine geringere radiale Ausdehnung aufweisen als der radiale Abschnitt 12.

Das in Figur 3 dargestellte Profil 9 ist ähnlich ausgebildet wie das Profil 9 aus Figur 2; lediglich die Profilkanten 13 und 14 sind über die Radialrichtung hinaus von den axialen Abschnitten 10 und 11 zurückgebogen. Wie anhand eines Vergleichs mit Figur 2 zu erkennen ist, ergibt sich dadurch kaum eine Verkürzung der Bewegungsmöglichkeiten des Metallschlauchs 3, während die Stabilität des Metallschlauchs 3 leicht verbessert wurde.

Das in Figur 4 dargestellte Profil 9 verzichtet gänzlich auf abgebogene Profilkanten; es besteht vielmehr lediglich aus einem äußeren axialen Abschnitt 11, einem inneren axialen Abschnitt 10 und einem diesen verbindenden radialen Abschnitt 12. Die Beweglichkeit des Metallschlauchs 3 wird dadurch logischerweise nochmals erheblich erhöht, allerdings um den Preis einer fehlenden Auszugssicherung und einer deutlich erhöhten Durchlässigkeit für Gase.

Figur 5 zeigt eine vierte Variante eines Profils 9, bei der die abgebogenen Profilkanten 13 und 14 an ihren Enden zusätzlich hakenförmig umgebogen sind, um die Stabilität des Metallschlauchs 3 bei Winkelbewegungen zu erhöhen. Im Vergleich mit Figur 2 ist deutlich sichtbar, dass dies zu Lasten insbesondere der axialen Beweglichkeit des Metallschlauchs 3 geht.

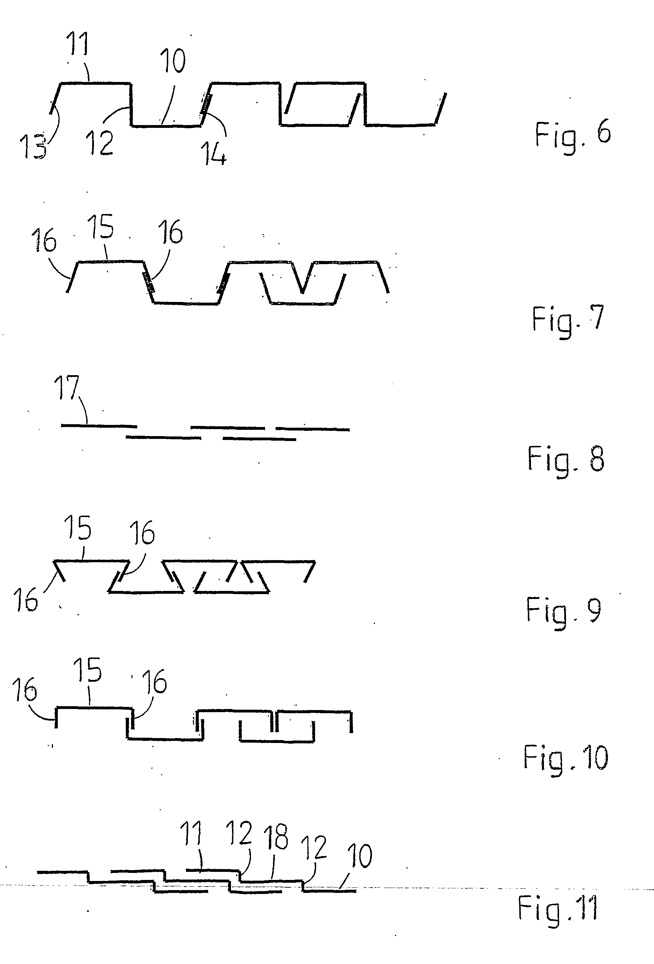

Figur 6 zeigt ein Profil 9, das ähnlich wie das in Figur 3 dargestellte Profil ausgestaltet ist, wobei allerdings die Profilkanten 13 und 14 nicht zurückgebogen sind, sondern einen offenen Winkel einnehmen.

Den in den Figuren 2 bis 6 gezeigten Profilen ist gemeinsam, dass sie einen radialen Abschnitt 12 aufweisen. Es soll an dieser Stelle ausdrücklich darauf hingewiesen werden, dass dieser Profilabschnitt keineswegs radial verlaufen muss; es sind vielmehr auch andere Verläufe dieses Verbindungsabschnitts denkbar.

Die in den Figuren 7 bis 10 dargestellten Profile unterscheiden sich von den in den Figuren 2 bis 6 gezeigten Profilen dadurch, dass jeweils eine nach innen orientierte Wicklung bzw. ein solches Segment sich mit einer nach außen orientierten Wicklung bzw. einem solchen Segment abwechselt.

Die in den Figuren 7, 9 und 10 dargestellten Profile sind im weitesten Sinne U-förmig bzw. dach- oder klammerförmig ausgestaltet, mit einem U-Rücken 15 und zwei sich daran anschließenden, abgebogenen U-Schenkeln 16. In Figur 7 stehen die U-Schenkel 16 in einem stumpfen, geöffneten Winkel zum U-Rücken 15, während sie in Figur 9 mit dem U-Rücken 15 einen spitzen, mehr geschlossenen Winkel bilden und in Figur 10 rechtwinklig abstehen. Dementsprechend ist die Beweglichkeit des in Figur 10 dargestellten Metallschlauchs 3 am größten.

Figur 8 zeigt einen Metallschlauch 3, der aus zwei radial beabstandeten Lagen von planen Metallbändern 17 besteht.

Figur 11 Schließlich zeigt Profile eines Metallschlauchs 3, die entsprechend den Profilen in Figur 4 ausgestaltet sind, jedoch zwei weitere Abkantungen aufweisen, um die Durchlässigkeit für den Gasstrom zu vermindern. Diese Profile bestehen demgemäß aus einem äußeren axialen Abschnitt 11, einem inneren axialen Abschnitt 10, einem (zusätzlichen) mittleren axialen Abschnitt 18 und zwei diese axiale Abschnitte 10, 11, 18 verbindende radiale Abschnitte 12.

Allen in den Figuren 1 bis 11 gezeigten Profilen 9 des Metallschlauchs 3 liegt die erfindungsgemäße Erkenntnis zugrunde, dass in der in den Figuren 2 bis 11 jeweils rechts dargestellten Stauchlage des Metallschlauchs 3 ein Formschluss - also eine radiale Überlappung der Profilkanten 13, 14 - wie beim Agraffprofil nicht notwendig ist und durch Weglassen derselben eine wesentlich erhöhte Beweglichkeit des Metallschlauchs 3 und somit eine vorteilhaft kurze Bauweise des gesamten Leitungselements erzielt werden kann.

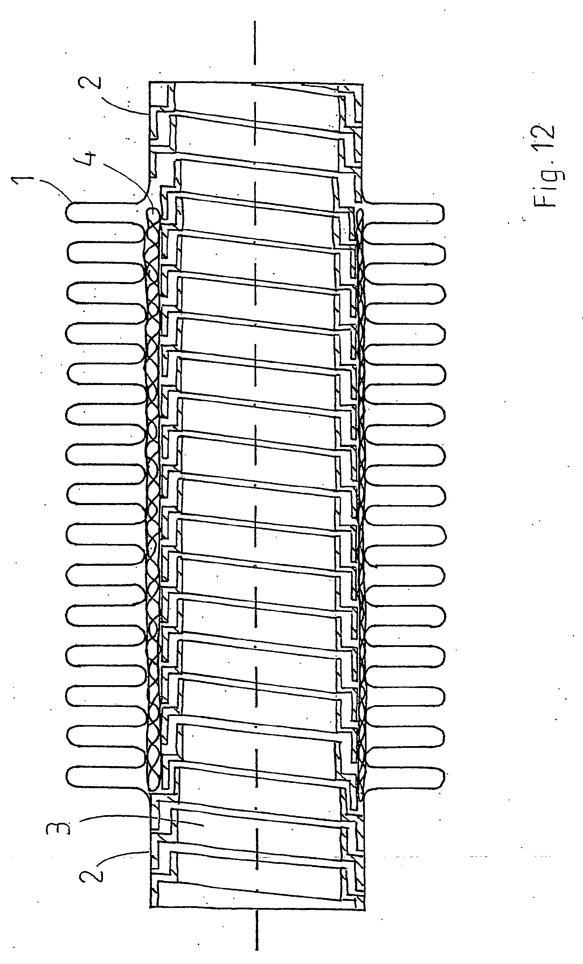

Die Figuren 12 bis 16 zeigen verschiedene Varianten eines erfindungsgemäßen Leitungselements, bei dem ein Metallschlauch 3 zum Einsatz kommt, der aus Profilen gewickelt ist, wie sie in Figur 4 dargestellt sind. Zwischen diesem Metallschlauch 3 und dem Metallbalg 1 ist jeweils ein als Gestrickeschlauch ausgebildeter Abstandhalter 4 großflächig angeordnet.

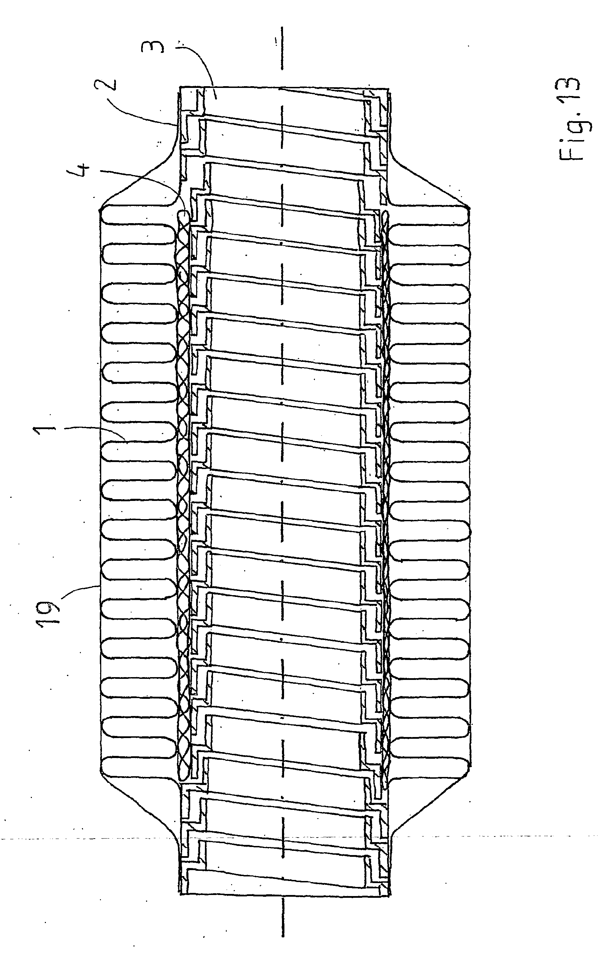

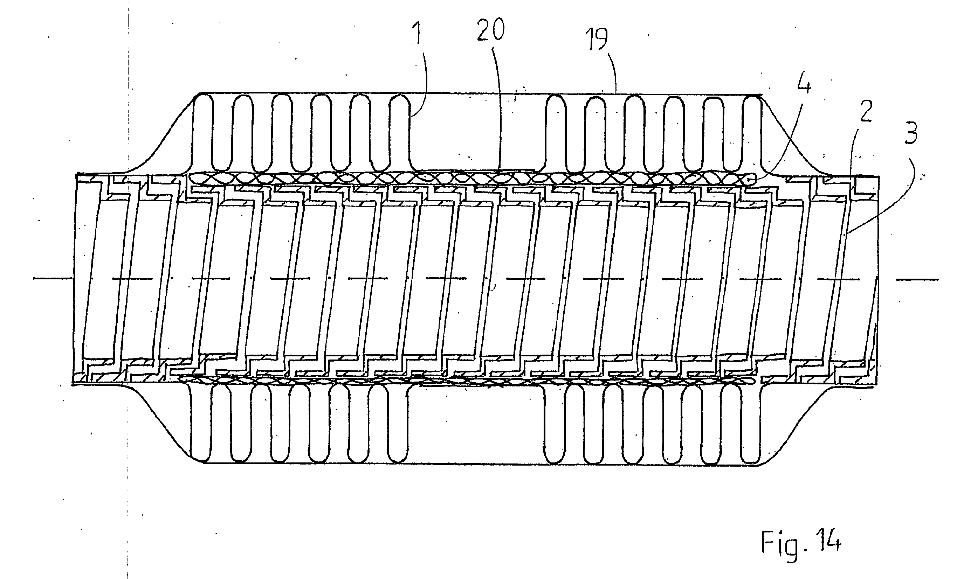

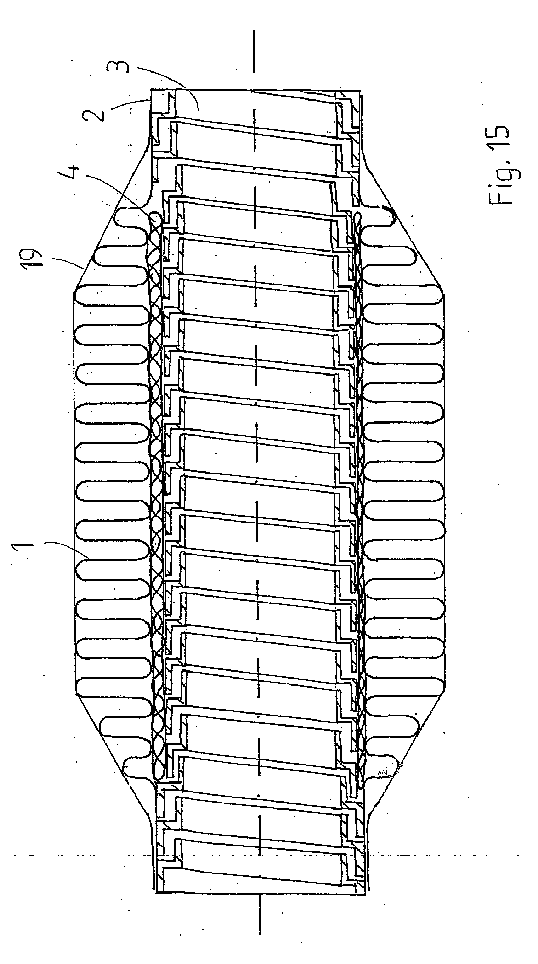

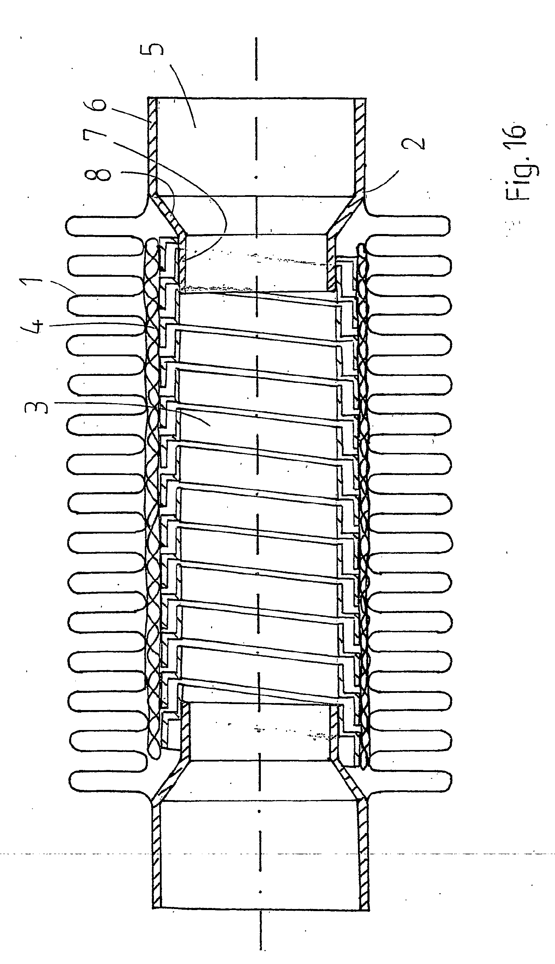

Während Figur 12 einen einfachen Metallbalg 1 mit zylindrischen Enden 2 zeigt, in dem koaxial innen liegend der Metallschlauch 3 und der dazwischen angeordnete Abstandhalter 4 sitzen, wobei der Metallschlauch 3 stoffschlüssig, beispielsweise über eine Schweißverbindung, direkt an den zylindrischen Enden 2 des Metallbalgs 1 festgelegt ist, zeigt Figur 13 das selbe Leitungselement wie Figur 12, jedoch mit einem den Metallbalg 1 außen umhüllenden Geflechtsschlauch 19, der an den zylindrischen Enden 2 des Metallbalgs 1 ebenfalls stoffschlüssig angebracht ist. In Figur 14 ist im wesentlichen das selbe Leitungselement dargestellt, jedoch kommt hier ein anderer Metallbalg 1 zum Einsatz: Dieser besitzt mittig einen nicht-gewellten, also zylindrisch ausgebildeten Bereich 20. Auch in Figur 15 ist der Metallbalg 1 gegenüber den Figuren 12 und 13 verändert, und zwar dahingehend, dass seine Endwellen in ihrer radialen Ausdehnung allmählich verkleinert sind, um einen weicheren Übergang für den umhüllenden Geflechtsschlauch 19 zu schaffen und hierdurch die auf die Endwellen aufgrund des Geflechtsschlauchs 19 wirkenden Biegebelastungen zu reduzieren. Figur 16 zeigt wieder ein Leitungselement gemäß Figur 12, bei dem jedoch die Anbindung des Metallschlauchs 3 an die zylindrischen Enden 2 des Metallbalgs 1 nicht direkt, sondern, wie anhand Figur 1 bereits beschrieben, indirekt über jeweils ein Anschlussstück 5 an beiden Enden erfolgt.

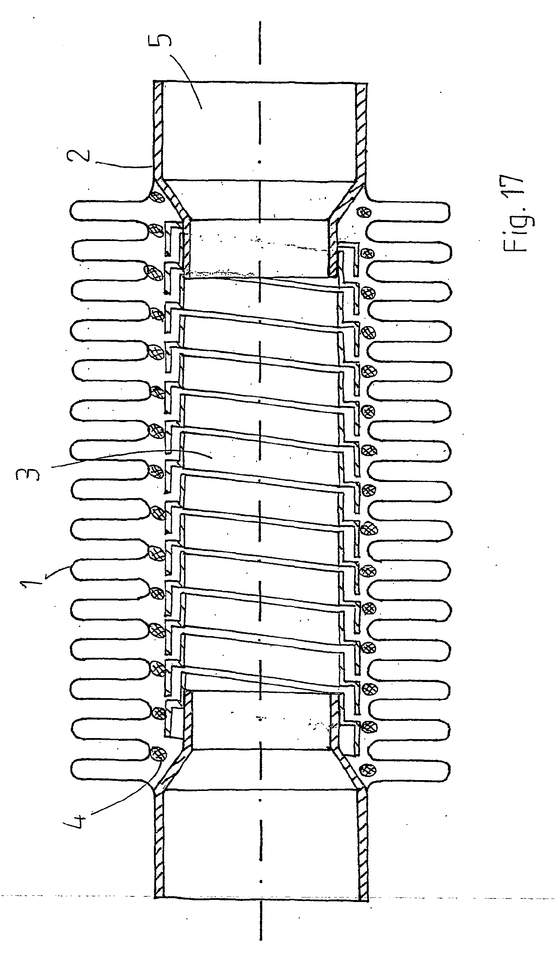

In Figur 17 ist ein Leitungselement dargestellt, dass wiederum mit zwei Anschlussstücken 5 zur Anbindung des Metallschlauchs 3 an die zylindrischen Enden 2 des Metallbalgs 1 versehen ist und im wesentlichen dem Leitungselement aus Figur 16 entspricht. Allerdings ist hier der Abstandhalter 4 nicht mehr als Gestrickeschlauch ausgebildet, sondern er besteht aus einer helixförmigen Wicklung zwischen dem Metallbalg 1 und dem Metallschlauch 3.

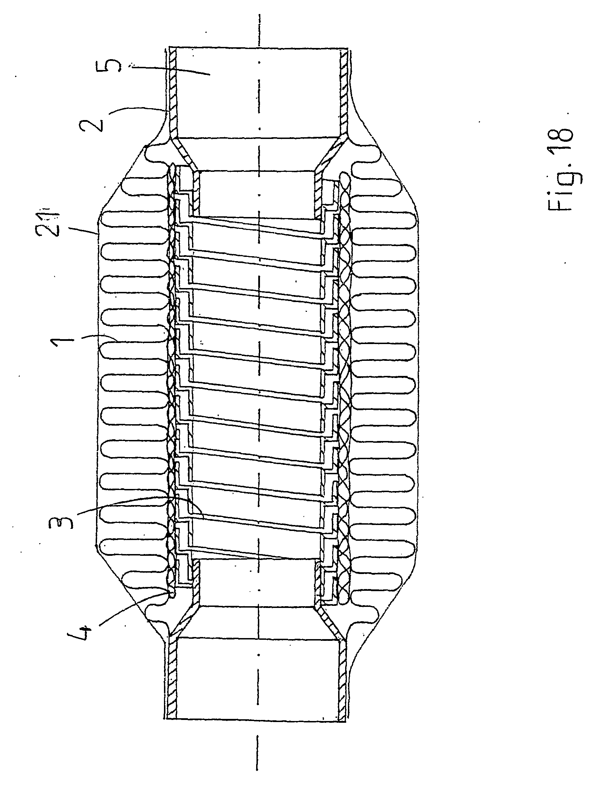

Die Figuren 18 bis 20 zeigen schließlich verschiedene Varianten eines erfindungsgemäßen Leitungselements, bei dem wiederum ein Metallschlauch 3 mit Profilen aus Figur 4 eingesetzt wird.

In Figur 18 sitzt der Metallschlauch 3 in einem Metallbalg 1, dessen Endwellen in Ihrer radialen Ausdehnung allmählich verkleinert sind, und dessen zylindrische Enden 2 über jeweils ein Anschlussstück 5 indirekt mit dem Metallschlauch 3 verbunden sind. Ein zwischen dem Metallschlauch 3 und dem Metallbalg 1 angeordneter Abstandhalter 4 besteht wiederum aus einem großflächigen Gestrickeschlauch. Außen den Metallbalg 1 umhüllend, ist in diesem Ausführungsbeispiel nunmehr ein weiterer Gestrickeschlauch 21 angeordnet.

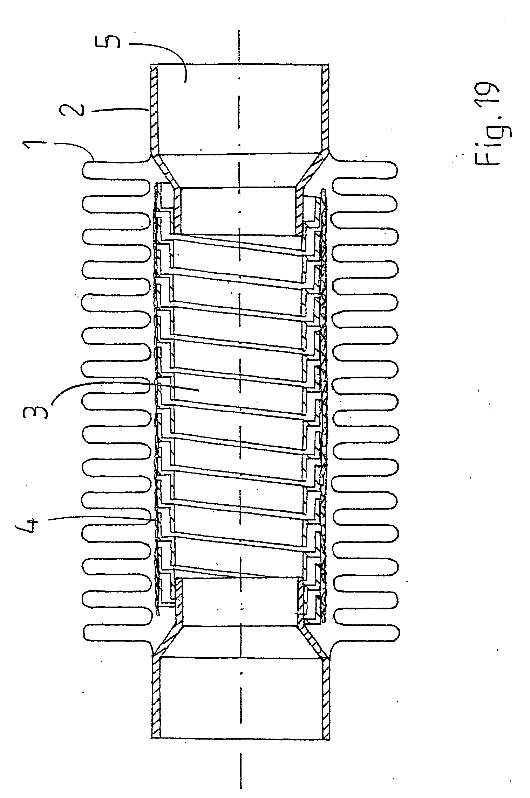

Figur 19 zeigt einen ähnlichen Aufbau wie Figur 16, jedoch ist hier der Abstandhalter 4 als wesentlich dünnerer Gestrickeschlauch ausgebildet und liegt demgemäß zwar einerseits an der Außenfläche des Metallschlauchs 3 auf, berührt jedoch den Metallbalg 1 im Ruhezustand nicht.

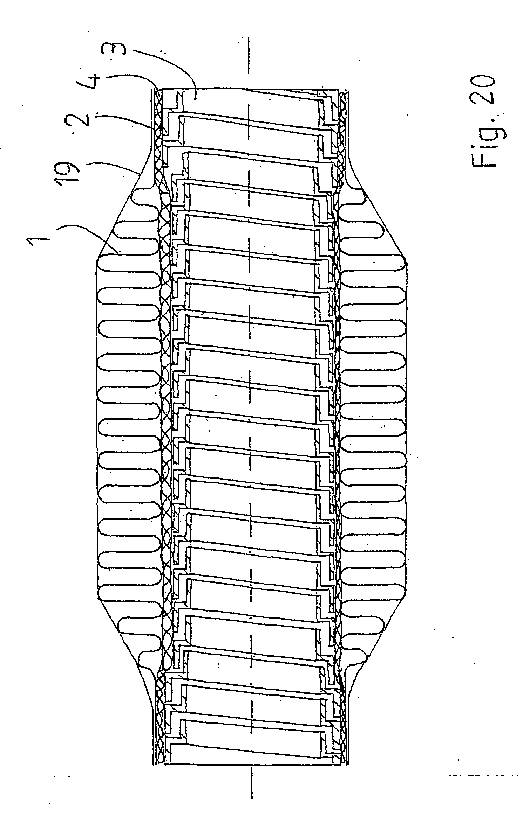

Figur 20 schließlich zeigt ein erfindungsgemäßes Leitungselement mit Metallbalg 1, Metallschlauch 3, einem zwischen diesen beiden Elementen angeordneten, als Gestrickeschlauch ausgebildeten Abstandhalter 4 und einem außen liegenden Geflechtsschlauch 19. Der Abstandhalter 4 erstreckt sich axial bis zwischen die aufgeweiteten Enden des Metallschlauchs 3 und die zylindrischen Enden 2 des Metallbalgs 1.

## Patentansprüche

1. Flexibles Leitungselement für die Abgasanlage eines Kraftfahrzeugs, mit einem schraubengangförmigen oder ringgewellten Metallbalg (1), mit einem koaxial innerhalb des Metallbalgs (1) angeordneten, schraubengangförmig gewickelten oder ringförmige Segmente aufweisenden Metallschlauch (3), dessen Außenquerschnitt kleiner als der lichte Innenquerschnitt des Metallbalgs (1) ist, und mit mindestens einem zwischen dem Metallbalg (1) und dem Metallschlauch (3) angeordneten Abstandhalter (4),
**dadurch gekennzeichnet,**
**dass** der Metallschlauch (3) so ausgebildet ist, dass die einzelnen Wicklungen oder die einzelnen ringförmigen Segmente zumindest in der Stauchlage des Metallschlauchs (3) in Radialrichtung keinen Formschluss mit der jeweils benachbarten Wicklung oder dem jeweils benachbarten Segment aufweisen.

2. Flexibles Leitungselement nach Anspruch 1,
**dadurch gekennzeichnet,**
**dass** der Abstandhalter (4) aus einem Gewebe, Gestricke, Geflecht oder Vlies gebildet ist.

3. Flexibles Leitungselement nach einem der Ansprüche 1 oder 2,
**dadurch gekennzeichnet,**
**dass** der Abstandhalter (4) zumindest lokal stoff-, form- oder kraftschlüssig am Metallbalg (1) und/oder am Metallschlauch (3) fixiert ist.

4. Flexibles Leitungselement nach einem der Ansprüche 1 bis 3,
**dadurch gekennzeichnet,**
**dass** der Abstandhalter (4) so angeordnet ist, dass er den Metallschlauch (3) innerhalb des Metallbalgs (1) radial festlegt.

5. Flexibles Leitungselement nach einem der Ansprüche 1 bis 4,
**dadurch gekennzeichnet,**
**dass** der Metallbalg (1) außen zumindest bereichsweise von einem Geflecht (19) und/oder Gestricke umgeben ist.

6. Flexibles Leitungselement nach Anspruch 5,
**dadurch gekennzeichnet,**
**dass** der Metallbalg (1) außen zumindest bereichsweise von mehreren Geflechten (19) und/oder Gestricken umgeben ist.

7. Flexibles Leitungselement nach einem der Ansprüche 1 bis 6,
**dadurch gekennzeichnet,**
**dass** der Metallschlauch (3) aus Wicklungen oder Segmenten mit einem Profil (9) gebildet ist, welches im wesentlichen aus einem inneren (10) und einem äußeren axialen Abschnitt (11) sowie einem diese verbindenden Abschnitt (12) besteht.

8. Flexibles Leitungselement nach einem der Ansprüche 1 bis 6,
**dadurch gekennzeichnet,**
**dass** der Metallschlauch (3) aus Wicklungen oder Segmenten mit einem Profil (9) gebildet ist, welches aus einem inneren (10), einem mittleren (18) und einem äußeren axialen Abschnitt (11) sowie zwei diese verbindenden radialen Abschnitten (12) besteht.

9. Flexibles Leitungselement nach einem der Ansprüche 1 bis 6,
**dadurch gekennzeichnet,**
**dass** der Metallschlauch (3) aus Wicklungen oder Segmenten mit einem im wesentlichen dachförmigen oder klammerförmigen Profil (15, 16) gebildet ist, wobei die axial benachbarten Profile im Wechsel nach radial innen und nach radial außen orientiert sind.

10. Flexibles Leitungselement nach einem der Ansprüche 1 bis 6,
**dadurch gekennzeichnet,**
**dass** der Metallschlauch (3) aus ebenen Wicklungen (17) oder Segmenten gebildet ist.

11. Flexibles Leitungselement nach einem der Ansprüche 1 bis 6,
**dadurch gekennzeichnet,**
**dass** der Metallschlauch (3) aus Wicklungen oder Segmenten mit einem im wesentlichen hakenförmigen Profil (9) gebildet ist, wobei abgebogene Profilkanten (13, 14) vorhanden sind, die sich zumindest in der Stauchlage des Metallschlauchs (3) in Radialrichtung gegenseitig nicht überlappen.

12. Flexibles Leitungselement nach Anspruch 11,
**dadurch gekennzeichnet,**
**dass** das Profil (9) aus einem inneren (10) und einem äußeren axialen Abschnitt (11), einem diese verbindenden radialen Abschnitt (12) sowie je einer von den axialen Abschnitten (10, 11) abgebogenen Profilkante (13, 14) gebildet ist, wobei die Profilkanten (13, 14) eine geringere radiale Ausdehnung aufweisen als der radiale Abschnitt (12).

13. Flexibles Leitungselement nach einem der Ansprüche 1 bis 12,
**dadurch gekennzeichnet,**
**dass** der Metallschlauch (3) schraubengangförmig gewickelt ist und dass er ein Verhältnis von gestreckter zu gestauchter Steigung größer als 1,39 aufweist.

14. Flexibles Leitungselement nach einem der Ansprüche 1 bis 13,
**dadurch gekennzeichnet,**
**dass** der Metallschlauch (3) einen kreisrunden, abgeflachten oder polygonförmigen Querschnitt aufweist.

15. Flexibles Leitungselement nach einem der Ansprüche 1 bis 14,
**dadurch gekennzeichnet,**
**dass** der Metallschlauch (3) aus zwei oder mehr Bändern bzw. Profilblechen hergestellt ist.

16. Flexibles Leitungselement nach Anspruch 15,
**dadurch gekennzeichnet,**
**dass** der Metallschlauch (3) aus mindestens zwei Bändern aus unterschiedlichem Material hergestellt ist.

17. Flexibles Leitungselement nach einem der Ansprüche 1 bis 16,
**dadurch gekennzeichnet,**
**dass** an mindestens einem der beiden Enden des Leitungselements ein Anschlussstück (5) vorgesehen ist, mit einem äußeren Rohrabschnitt (6) zum Aufsetzen eines zylindrischen Endes (2) des Metallbalgs (1) und einem inneren Rohrabschnitt (7) zum Aufsetzen oder Einsetzen des Metallschlauchs (3).

18. Flexibles Leitungselement nach Anspruch 17,
**dadurch gekennzeichnet,**
**dass** der Metallschlauch (3) stoff-, form- und/oder kraftschlüssig mit dem inneren Rohrabschnitt (7) des Anschlussstücks (5) verbunden ist.

19. Flexibles Leitungselement nach einem der Ansprüche 1 bis 16,
**dadurch gekennzeichnet,**
**dass** der Metallschlauch (3) an mindestens einem der beiden Enden des Leitungselements stoff-, form- und/oder kraftschlüssig direkt mit dem Metallbalg (1) verbunden ist.

20. Flexibles Leitungselement nach einem der Ansprüche 1 bis 17,
**dadurch gekennzeichnet,**
**dass** der Metallbalg (1) eine oder mehrere Endwellen mit reduziertem Querschnitt aufweist.

21. Flexibles Leitungselement nach Anspruch 20,
**dadurch gekennzeichnet,**
**dass** mindestens eine im Querschnitt reduzierte Endwelle des Metallbalgs (1) breiter ausgeformt ist als die übrigen Wellen.

22. Flexibles Leitungselement nach einem der Ansprüche 1 bis 21,
**dadurch gekennzeichnet,**
**dass** der Metallbalg (1) in einem mittleren Bereich einen nicht gewellten Rohrabschnitt (20) aufweist.

23. Flexibles Leitungselement nach einem der Ansprüche 1 bis 22,
**dadurch gekennzeichnet,**
**dass** der Metallbalg (1) einen kreisrunden oder abgeflachten Querschnitt aufweist.

## Claims

1. Flexible duct element for the exhaust gas system of a motor vehicle, having a helical or annularly corrugated metal bellows (1), having a metal hose (3) arranged coaxially inside the metal bellows (1), which metal hose (3) is helically wound or has ring-shaped segments and the outer cross-section of which is smaller than the clear internal cross-section of the metal bellows (1), and having at least one spacer (4) arranged between the metal bellows (1) and the metal hose (3),
**characterised in that**
the metal hose (3) is so constructed that the individual windings or the individual ring-shaped segments, at least in the compressed state of the metal hose (3), have no interlocked connection in the radial direction with the respective adjacent winding or the respective adjacent segment.

2. Flexible duct element according to claim 1,
**characterised in that**
the spacer (4) is formed from a woven, knitted, braided or non-woven element.

3. Flexible duct element according to either one of claims 1 and 2,
**characterised in that**
the spacer (4) is at least locally fixed on the metal bellows (1) and/or on the metal hose (3) by a bonded, interlocked or force-based connection.

4. Flexible duct element according to any one of claims 1 to 3,
**characterised in that**
the spacer (4) is so arranged that it fixes the position of the metal hose (3) radially inside the metal bellows (1).

5. Flexible duct element according to any one of claims 1 to 4,
**characterised in that**
the metal bellows (1) is surrounded on the outside, at least in some regions, by a braided element (19) and/or knitted element.

6. Flexible duct element according to claim 5,
**characterised in that**
the metal bellows (1) is surrounded on the outside, at least in some regions, by a plurality of braided elements (19) and/or knitted elements.

7. Flexible duct element according to any one of claims 1 to 6,
**characterised in that**
the metal hose (3) is formed from windings or segments having a profile (9) which consists substantially of an inner axial portion (10) and an outer axial portion (11) as well as a portion (12) joining them.

8. Flexible duct element according to any one of claims 1 to 6,
**characterised in that**
the metal hose (3) is formed from windings or segments having a profile (9) which consists of an inner axial portion (10), a middle axial portion (18) and an outer axial portion (11) as well as two radial portions (12) joining them.

9. Flexible duct element according to any one of claims 1 to 6,
**characterised in that**
the metal hose (3) is formed from windings or segments having a substantially roof-shaped or clip-shaped profile (15, 16), the axially adjacent profiles being oriented alternately radially inwards and radially outwards.

10. Flexible duct element according to any one of claims 1 to 6,
**characterised in that**
the metal hose (3) is formed from flat windings (17) or segments.

11. Flexible duct element according to any one of claims 1 to 6,
**characterised in that**
the metal hose (3) is formed from windings or segments having a substantially hook-shaped profile (9), the profile having bent-over edges (13, 14) which do not overlap one another in the radial direction at least in the compressed state of the metal hose (3).

12. Flexible duct element according to claim 11,
**characterised in that**
the profile (9) is formed from an inner axial portion (10) and an outer axial portion (11), a radial portion (12) joining them as well as a profile edge (13, 14) that is bent back from each of the axial portions (10, 11), the profile edges (13, 14) having a smaller radial extent than the radial portion (12).

13. Flexible duct element according to any one of claims 1 to 12,
**characterised in that**
the metal hose (3) is helically wound and it has a ratio of stretched to compressed pitch greater than 1.39.

14. Flexible duct element according to any one of claims 1 to 13,
**characterised in that**
the metal hose (3) has a circular, flattened or polygonal cross-section.

15. Flexible duct element according to any one of claims 1 to 14,
**characterised in that**
the metal hose (3) is produced from two or more strips or profiled sheets.

16. Flexible duct element according to claim 15,
**characterised in that**
the metal hose (3) is produced from at least two strips of different material.

17. Flexible duct element according to any one of claims 1 to 16,
**characterised in that**
at at least one of the two ends of the duct element there is provided a connection piece (5), having an outer pipe portion (6) for attachment of a cylindrical end (2) of the metal bellows (1) and having an inner pipe portion (7) for attachment or insertion of the metal hose (3).

18. Flexible duct element according to claim 17,
**characterised in that**
the metal hose (3) is joined to the inner pipe portion (7) of the connection piece (5) by a bonded, interlocked and/or force-based connection.

19. Flexible duct element according to any one of claims 1 to 16,
**characterised in that**
at at least one of the two ends of the duct element, the metal hose (3) is joined directly to the metal bellows (1) by a bonded, interlocked and/or force-based connection.

20. Flexible duct element according to any one of claims 1 to 17,
**characterised in that**
the metal bellows (1) has one or more end corrugations of reduced cross-section.

21. Flexible duct element according to claim 20,
**characterised in that**
at least one end corrugation of the metal bellows (1) of reduced cross-section is made broader in shape than the remaining corrugations.

22. Flexible duct element according to any one of claims 1 to 21,
**characterised in that**
the metal bellows (1) has a non-corrugated pipe portion (20) in a central region.

23. Flexible duct element according to any one of claims 1 to 22,
**characterised in that**
the metal bellows (1) has a circular or flattened cross-section.

## Revendications

1. Elément de conduite flexible pour le système d'échappement d'un véhicule automobile, comprenant un soufflet métallique (1) hélicoïdal ou annelé ; un flexible métallique (3) logé coaxialement à l'intérieur du soufflet métallique (1), enroulé hélicoïdalement ou présentant des segments annulaires, et dont la section transversale extérieure est plus petite que la section transversale intérieure dudit soufflet métallique (1) ; et au moins une pièce d'espacement (4) interposée entre le soufflet métallique (1) et le flexible métallique (3),
**caractérisé par le fait**
**que** le flexible métallique (3) est réalisé de façon telle que, au moins dans la position contractée dudit flexible métallique (3), les enroulements individuels ou les segments annulaires individuels ne présentent, dans le sens radial, aucune solidarisation par concordance de formes avec l'enroulement respectivement voisin ou avec le segment respectivement voisin.

2. Elément de conduite flexible selon la revendication 1,
**caractérisé par le fait**
**que** la pièce d'espacement (4) est constituée d'un tissu, d'un tricot, d'un tressage ou d'une structure non tissée.

3. Elément de conduite flexible selon l'une des revendications 1 ou 2,
**caractérisé par le fait**
**que** la pièce d'espacement (4) est consignée au moins localement à demeure sur le soufflet métallique (1) et/ou sur le flexible métallique (3), par assemblage matériel, par conformation ou par coopération mécanique.

4. Elément de conduite flexible selon l'une des revendications 1 à 3,
**caractérisé par le fait**
**que** la pièce d'espacement (4) occupe une position telle qu'elle verrouille radialement le flexible métallique (3) à l'intérieur du soufflet métallique (1).

5. Elément de conduite flexible selon l'une des revendications 1 à 4,
**caractérisé par le fait**
**que** le soufflet métallique (1) est entouré extérieurement, au moins par zones, d'un tressage (19) et/ou de tricots.

6. Elément de conduite flexible selon la revendication 5,
**caractérisé par le fait**
**que** le soufflet métallique (1) est entouré extérieurement, au moins par zones, de plusieurs tressages (19) et/ou tricots.

7. Elément de conduite flexible selon l'une des revendications 1 à 6,
**caractérisé par le fait**
**que** le flexible métallique (3) est composé d'enroulements ou de segments dotés d'un profil (9) comprenant, pour l'essentiel, des tronçons axiaux intérieur (10) et extérieur (11), ainsi qu'un tronçon (12) solidarisant ces derniers.

8. Elément de conduite flexible selon l'une des revendications 1 à 6,
**caractérisé par le fait**
**que** le flexible métallique (3) est composé d'enroulements ou de segments dotés d'un profil (9) comprenant des tronçons axiaux intérieur (10), central (18) et extérieur (11), ainsi que deux tronçons radiaux (12) solidarisant ces derniers.

9. Elément de conduite flexible selon l'une des revendications 1 à 6,
**caractérisé par le fait**
**que** le flexible métallique (3) est composé d'enroulements ou de segments dotés d'un profil (15, 16) revêtant sensiblement la forme d'une toiture ou d'une agrafe, les profils axialement voisins étant orientés, en alternance, radialement vers l'intérieur et radialement vers l'extérieur.

10. Elément de conduite flexible selon l'une des revendications 1 à 6,
**caractérisé par le fait**
**que** le flexible métallique (3) est composé d'enroulements (17) ou de segments plans.

11. Elément de conduite flexible selon l'une des revendications 1 à 6,
**caractérisé par le fait**
**que** le flexible métallique (3) est composé d'enroulements ou de segments dotés d'un profil (9) revêtant sensiblement la forme d'un crochet, avec la présence de bords profilés coudés (13, 14) qui, au moins dans la position contractée dudit flexible métallique (3), ne se chevauchent pas réciproquement dans le sens radial.

12. Elément de conduite flexible selon la revendication 11,
**caractérisé par le fait**
**que** le profil (9) est composé de tronçons axiaux intérieur (10) et extérieur (11), d'un tronçon radial (12) solidarisant ces derniers, ainsi que d'un bord profilé respectif (13, 14) coudé à partir desdits tronçons axiaux (10, 11), lesdits bords profilés (13, 14) possédant une moindre étendue radiale que ledit tronçon radial (12).

13. Elément de conduite flexible selon l'une des revendications 1 à 12,
**caractérisé par le fait**
**que** le flexible métallique (3) est enroulé hélicoïdalement ; et par le fait qu'il présente un rapport supérieur à 1,39 entre les pas d'enroulement à l'état déployé et à l'état contracté.

14. Elément de conduite flexible selon l'une des revendications 1 à 13,
**caractérisé par le fait**
**que** le flexible métallique (3) possède une section transversale circulaire, aplatie ou polygonale.

15. Elément de conduite flexible selon l'une des revendications 1 à 14,
**caractérisé par le fait**
**que** le flexible métallique (3) est respectivement fabriqué à partir de bandes ou de tôles profilées, au nombre de deux ou plus.

16. Elément de conduite flexible selon la revendication 15,
**caractérisé par le fait**
**que** le flexible métallique (3) est fabriqué à partir d'au moins deux bandes en des matériaux différents.

17. Elément de conduite flexible selon l'une des revendications 1 à 16,
**caractérisé par** la présence,
à au moins l'une des deux extrémités dudit élément de conduite, d'une pièce de raccordement (5) comprenant un segment tubulaire extérieur (6), affecté à la mise en place d'une extrémité cylindrique (2) du soufflet métallique (1), et un segment tubulaire intérieur (7) destiné à l'enfilement ou à l'insertion du flexible métallique (3).

18. Elément de conduite flexible selon la revendication 17,
**caractérisé par le fait**
**que** le flexible métallique (3) est relié matériellement, par conformation et/ou mécaniquement au segment tubulaire intérieur (7) de la pièce de raccordement (5).

19. Elément de conduite flexible selon l'une des revendications 1 à 16,
**caractérisé par le fait**
**que** le flexible métallique (3) est relié directement au soufflet métallique (1), à au moins l'une des deux extrémités dudit élément de conduite, par assemblage matériel, par conformation et/ou par coopération mécanique.

20. Elément de conduite flexible selon l'une des revendications 1 à 17,
**caractérisé par le fait**
**que** le soufflet métallique (1) comporte une ou plusieurs ondulation(s) extrême(s) de section transversale réduite.

21. Elément de conduite flexible selon la revendication 20,
**caractérisé par le fait**
**qu**'au moins une ondulation extrême du soufflet métallique (1), dotée d'une section transversale réduite, est configurée plus large que les ondulations restantes.

22. Elément de conduite flexible selon l'une des revendications 1 à 21,
**caractérisé par le fait**
**que** le soufflet métallique (1) présente, dans une région centrale, un segment tubulaire (20) dépourvu d'ondulations.

23. Elément de conduite flexible selon l'une des revendications 1 à 22,
**caractérisé par le fait**
**que** le soufflet métallique (1) possède une section transversale circulaire ou aplatie.
